Europäisches Patentamt

European Patent Office

Office européen des brevets

(19)

(11) Publication number: **0 138 079 B1**

# (12) EUROPEAN PATENT SPECIFICATION

(45) Date of publication of patent specification: **07.08.91**     (51) Int. Cl.5: **G06K 9/68**, G06K 9/34

(21) Application number: **84111043.0**

(22) Date of filing: **17.09.84**

(54) **Character recognition apparatus and method for recognising characters associated with diacritical marks.**

(30) Priority: **29.09.83 US 537279**

(43) Date of publication of application:
**24.04.85 Bulletin 85/17**

(45) Publication of the grant of the patent:
**07.08.91 Bulletin 91/32**

(84) Designated Contracting States:
**CH DE FR GB IT LI NL**

(56) References cited:
**EP-A- 0 113 119**
**FR-A- 2 122 883**
**US-A- 3 710 321**
**US-A- 4 045 773**

(73) Proprietor: **International Business Machines Corporation**
**Old Orchard Road**
**Armonk, N.Y. 10504(US)**

(72) Inventor: **Bednar, Gregory Martin**
**2640 Brook Hollow Road**
**Matthews North Carolina 28105(US)**
Inventor: **Fryer, George Bernard**
**5500 Foxcrest Drive**
**Charlotte North Carolina 28212(US)**
Inventor: **Narasimha, Manthri Selvapullai**
**7500 Hawkstand Lane**
**Charlotte North Carolina 28210(US)**

(74) Representative: **Atchley, Martin John Waldeg-rave**
**IBM United Kingdom Limited Intellectual Property Department Hursley Park Winchester Hampshire SO21 2JN(GB)**

## Description

The present invention relates to the field of character recognition and more particularly to the recognition of characters or symbols which may have associated therewith diacritical marks, using optical character recognition apparatus.

Languages by which human beings communicate employ a set of symbols which comprise an alphabet. Certain of these symbols can be modified by designated signs or marks, called diacritical marks, which are positioned as required by the rules of the language. These diacritical marks may, for example, require an altered pronunciation of the symbol or base character with which they are associated.

The Japanese phonetic alphabet Katakana is of this type, and this alphabet will be used herein to describe the present invention, by way of example and not by way of limitation.

Prior art character recognition apparatus has taken into account the need to provide special means to accommodate characters which may have an associated diacritical mark and to recognise the difference between a character with a diacritical mark and one without. United States Patent A-3,710,321 provides such an arrangement. In the device of this patent, a central, horizontal row area contains the major characters or base symbols of the alphabet. Certain of these major characters can have diacritical marks associated therewith, in areas above or below the major character. When a vertical scan of a major character, and the recognition of this character, indicates that this character is of the class with which a diacritical mark can be associated, then vertical scanning of the next major character is momentarily interrupted, and the scan is diverted to the diacritical area above or below (as the case may be) the just-recognised character. Thereafter, scanning of the major character continues, and special upper or lower diacritical recognition logic is enabled as such diacritical upper or lower areas are scanned.

Of the two Japanese alphabets, Hiragana and Katakana, the latter is the accepted means of interlacing or representing the Japanese language to data processing equipment by means of character recognition apparatus. Each Katakana sound is a syllable formed by selectively adding each of the vowels A, I, U, E and O to each of the consonants K, S, T, N, H, M, Y, R and W. The combinations YI, YE, WI, WU and WE are excluded. The A, I, U, E, O and N sounds by themselves are also included. The pronunciation for certain of these basic symbols can be modified by adding diacritical marks, either two small lines collectively called a nigori or a small circle called a maru, immediately adjacent the upper right of the basic symbol. In addition, a long vowel symbol written as a dash follows certain basic symbols to alter their pronunciation. The two diacritical marks plus the long vowel symbol are combined with certain of the basic letters to expand the overall Katakana alphabet to include 72 characters. Those Katakana characters with a diacritical mark are often called sonants, and those without a diacritical mark are called non-sonants.

This large symbol set makes manual keying a difficult, slow and costly means of entering data for processing in data processing apparatus. Several prior art optical character recognition (OCR) machines have been developed that automatically read handwritten Katakana symbols. However, due to the complexity of the sonant characters and the close location of the diacritical mark to the base symbol, these machines require that the diacritical mark be written as a separate mark, in its own character space, clearly separated from the base symbol which it modifies. As a result, only the 46 basic non-sonant character shapes plus the two separated and isolated diacritical marks are machine readable, and the 25 sonant characters written in their natural form with the diacritical mark located upper-right and adjacent to the basic symbol cannot be read. Thus, a special set of writing rules that differs from the usual rules of the Katakana language must be utilised for these OCR machines.

The object of the present invention is to provide improved character recognition apparatus and a method of operating such apparatus for the identification of unknown characters and any diacritical marks associated therewith.

According to the present invention, a character recognition apparatus, for recognising unknown characters of a known character set, some of the characters having diacritical marks associated therewith, including

storage means for storing character data of an unknown character which may be associated with a diacritical mark,

means for extracting from the stored character data the character data corresponding to a predetermined portion of the character which is the expected location of a diacritical mark, and

examining means for examining the diacritical mark character data in the extracted character data and the rest of the stored character data of the unknown character in order to recognise the unknown character and any diacritical mark associated therewith,

is characterised in that
said extracting means comprises

means for justifying the extracted diacritical mark character data in a position spaced from the rest of the unknown character and means for storing the extracted and justified data,

and in that said examining means comprises

means for examining the un-normalised diacritical mark character data in order to recognise said diacritical mark,

means for normalising the rest of said stored character data, and

means for examining said normalised character data in order to recognise said unknown character.

According to another aspect of the present invention, a method of recognising unknown characters of a known character set, some of the characters having diacritical marks associated therewith, including the steps of

storing character data of an unknown character which may be associated with a diacritical mark,

extracting from the stored character data the character data corresponding to a predetermined portion of the character which is the expected location of a diacritical mark, and

examining the diacritical mark character data in the extracted character data and the rest of the stored character data of the unknown character in order to recognise the unknown character and any diacritical mark associated therewith,

is characterised in that
said data extraction operation comprises

justifying the extracted diacritical mark character data in a position spaced from the rest of the unknown character and storing the extracted and justified data,
and in that said examination operation comprises

examining the un-normalised diacritical mark character data in order to recognise said diacritical mark,

normalising the rest of said stored character data, and

examining said normalised character data in order to recognise said unknown character.

Apparatus in accordance with the present invention can be used with Katakana characters when the diacritical marks are either written in their natural adjacent form, or separately written under the constraints required by the above-mentioned OCR machines. All seventy-two Katakana alphabet shapes plus the two diacritical marks as separate stand-alone symbols can be recognised utilising the present invention, without special rules, thereby allowing optical character recognition to be extended to include general public handwriting and writing done according to the rules of the Katakana language.

Apparatus in accordance with the present invention for recognising unknown characters, where some of the characters may be associated with diacritical marks operates as follows. The character data of an unknown character which may be associated with a diacritical mark is stored. From the stored character data is extracted a portion of the data that corresponds to the predetermined area of the unknown character space which is the expected location of a diacritical mark. The extracted diacritical mark character data and the rest of the stored character data of the unknown character are examined to recognise the character. For example, in the Katakana alphabet the diacritical marks are located to the upper right portion of the character. The portion of the character data of the unknown character that corresponds to the upper right portion of the character space is extracted and examined for recognition. This extracted diacritical mark character data is upper-right justified and remains un-normalised during the examination and recognition process. The remaining character data of the unknown character is normalised and also examined for recognition of the Katakana character.

Characters modified by diacritical marks are normally wider than the same characters without diacritical marks and in implementing the present invention these differences are used to initially separate sonant characters from non-sonant characters. A row of unknown characters is scanned in their entirety parallel to the direction in which the lines are read, (i. e. horizontally read lines are horizontally scanned) and a horizontal profile is generated for the row of unknown characters. Logical tests are performed on the resulting profile data to separate the profile into individual segments representing an unknown character including any diacritical mark. When a proposed segmentation point for the horizontal profile coincides with a gap in the profile, the segmentation point is established. When the horizontal profile is continuous (i.e. when adjacent characters overlap) at a proposed segmentation point, the location of the proposed segmentation point is adjusted as follows. If the continuity of the profile extends less than a predetermined distance into the next-right-character position, the proposed segmentation point for the current character position is adjusted to the right to include the extended portion , which may be a diacritical mark. If the extension exceeds a predetermined distance, the position of the segmentation point can be adjusted to the left to account for a possible stroke extension of the next character (i.e. such as a diacritical mark or an adjacent character) written immediately to the right of the current character. Thus, for the Katakana alphabet, the present invention permits recognition of characters that have been written under the usual handwritten rules or under the constraints of prior art OCR machines.

Height and width parameters are used to initially separate a modified character from an unmodified character by analysing their relative size from measurements of their horizontal and/or vertical profiles. For the Katakana alphabet, sonant characters are initially separated from non-sonant characters based upon differences in the horizontal width of the entire character, including any diacritical mark. In the past, the coding of the height and width of a character has been through exclusive-bit-coding, which is inferior to the inclusive-bit-coding used in one embodiment of the present invention. Exclusive-bit-coding sets a single unique bit for each specific value or range of height and width. With a single bit test, all characters with a specific height or width can be separated from all other characters which are either greater than or less than the specified value. To assist in identifying Katakana sonant characters it is desirable to separate all characters which are less than a specific height or width (i.e. non-sonants) from all other characters which are greater than that value (i. e. sonants). With exclusive-bit-coding this requires the testing of multiple bits. Using inclusive-bit-coding, a continuous string of bits is set to indicate that the character is at least as wide as each of the bits that is set. By testing a single bit it is possible to separate all characters which are greater than a specific height or width from all those which are less than or equal to this value. Thus the usually wider and taller sonant characters having diacritical marks may be separated from the non-sonant characters that do not include a diacritical mark.

With respect to the encoding of the recognition results for Katakana characters, the Japanese Industries Standard for assigning recognition results provides a unique one byte code point for each of the forty-six basic Katakana symbols, and for the two diacritical marks nigori and maru. These diacritical code points indicate that the sonant is present as a separate symbol in its own character space, but they do not distinguish between the diacritical mark written as a separate symbol from the more natural form where the diacritical mark is combined with the basic character. By assigning two additional code points one can indicate that the diacritical mark is included with the basic character.

In accordance with one embodiment of the invention a particular procedure is used when a diacritical mark is recognised. The recognition result of the preceding character position is checked to verify that it is one of the twenty possible characters which can be modified by a nigori or that it is one of the five possible characters which can be modified by a maru. If the verification fails, the sonant and/or previous character recognitions can be rejected as invalid characters.

In order that the invention may be more readily understood an embodiment of the invention will now be described with reference to the accompanying drawings, in which:

Figure 1 is a schematic diagram reflecting the generation of data representing unknown characters by an optical scanner and the utilisation of the apparatus and method of the present invention for processing the data to obtain an output representing the unknown characters,

Figure 2 illustrates a line of several Katakana characters and the horizontal profile for the line of characters,

Figure 3 is a flowchart illustrating the pre-processing steps for segmenting a horizontal profile,

Figures 4A-4D illustrate in greater detail the sequence of steps set forth in the flowchart of Figure 3,

Figure 5 is a graph of the frequency of character occurrence versus the width of the horizontal profile for Katakana non-sonant characters and Katakana sonant characters,

Figure 6 is a flowchart illustrating the steps for sonant identification,

Figure 7 is a chart comparing exclusive-bit-coding and inclusive-bit-coding,

Figure 8 illustrates a Katakana character associated with a diacritical mark, with the diacritical mark enclosed in a predetermined localised area, as indicated by dashed lines,

Figure 9 illustrates the data in the predetermined localised area of Figure 8 justified to the upper right, and

Figure 10 is a flowchart illustrating a post-processing verification technique to validate the proper association of a diacritical mark with a character.

It is to be understood that although Japanese Katakana characters are illustrated, the present invention may be utilised with any alphabet having some characters that can include diacritical marks and other characters which cannot include diacritical marks. The diacritical marks may be located in any predetermined areas with respect to the characters, according to the rules of the language.

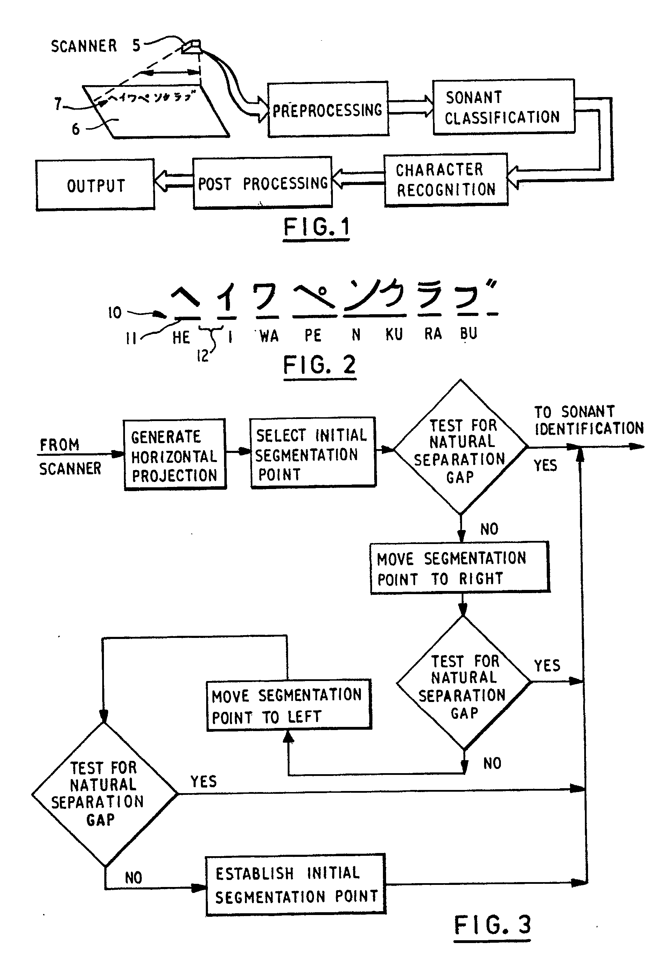

The schematic diagram of Figure 1 illustrates the use of an optical scanner 5 to generate data representing unknown characters scanned by the scanner. The scanner 5 is of a known construction and operation. It typically scans a document 6 on which are printed unknown characters, including any diacritical marks, in a direction parallel to the direction of reading of the characters. Figure 1 illustrates a horizontal scan of a line of characters 7. The scanner scans over the entire length of the document by moving either the document or scanner mechanism, and the entire width of the document by selecting a field of view of appropriate width and generates data representing the line of scanned characters. The generated character line data is preprocessed by generating a profile of the line of characters and dividing the profile into segments of individual characters, to thereby provide a block of character data for each individual character in the line. To classify the sonant characters, each block of character data has extracted therefrom the data representative of a predetermined localised area that corresponds to the expected location of a diacritical mark. The extracted character data and the rest of the character data are examined to recognise the respective diacritical mark and character. The preliminarily recognised character may then be subjected to a post processing verification procedure to ensure that any diacritical mark recognised is associated with a character that can may properly be associated with a diacritical mark under the applicable language rules.

Referring to Figure 2, the illustrated characters HE, I, WA, N, KU, and RA do not include diacritical marks and are referred to as non-sonants. The character BU includes the diacritical mark nigori (double line) in the upper right corner, and the character PE includes the diacritical mark maru (circle), also in the upper right corner. Both of these characters are referred to as sonants. As a preliminary to the process of recognising the characters in the line of characters the width of each of the characters in the line and the spacing between the characters is determined by generating a horizontal profile of the line of characters.

In order to generate such a profile, the optical scanner illustrated in Figure 1 scans over the line of characters in a series of scan lines extending parallel to the line of characters and spaced apart vertically and generates information representative of the characters in the line. This information consists of a set of coded signals for each of the scan lines representing the characters on the document. For each scan line the scanner generates logical zeros (0's) to represent a blank or background space, and logical ones (1's) to represent the presence of a portion of a character on the scan line. The scanned characters are thereby divided into picture elements (PELs). One method of generating the horizontal profile is to sequentially provide the sets of binary data signals generated for each of the scan lines for a line of characters to a register having storage positions that correspond to the picture element (PEL) locations of the scanned characters. Beginning with a clear register (i.e. all logical zeros), the binary data bits representing corresponding PELs in the sets of binary data are effectively logically combined using an OR function by successively providing them to the register. For each logical 1 in the sets of binary data, the corresponding register bit is set to a logical 1, and remains a logical 1 until the register is cleared after the entire line of characters has been scanned. For those PEL locations where there is only background space, the register bit will remain a logical zero. Having provided all of the sets of binary data to the register, it will reflect which horizontal positions have portions of character data present, and this data is reflected in the horizontal profile. Such a method of generating a horizontal character profile is described in United States Patent Application Serial No. 537280 filed 29 September 1983.

The horizontal character line profile, such as the one illustrated at reference numeral 10 in Figure 2, appears as a series of black segments (logical 1's) separated by gaps of white (logical 0's). The black segments 11 correspond to the widths of the characters and any associated diacritical marks. The white gaps 12 correspond to the separation between adjacent characters.

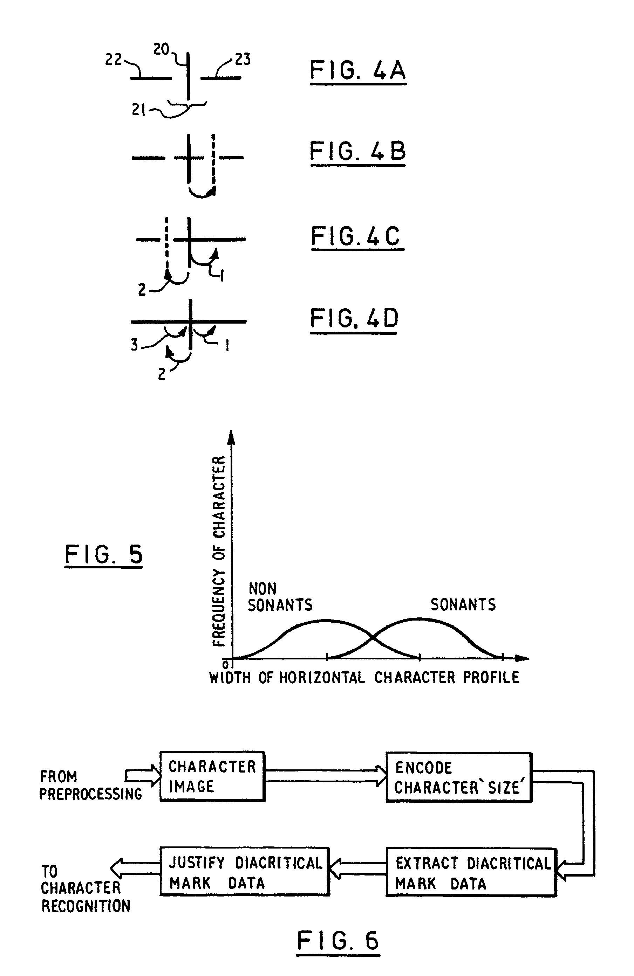

The horizontal profile is next separated into segments that represent individual unknown characters, including any diacritical marks. Referring to Figures 3 and 4, an initial segmentation is made between characters based upon a given pitch (spacing between centres of adjacent characters), or the calculation of the pitch, which may be determined using known techniques. Logical tests are made to determine if an initial proposed segmentation point coincides with a natural segmentation point or gap between adjacent segments of the horizontal profile corresponding to gaps between adjacent characters.

As illustrated in Figure 4A, if the proposed segmentation point 20 coincides with a gap 21 between adjacent horizontal profile segments 22, 23, the proposed segmentation point is established as a separation point between characters.

If the proposed segmentation point 20 does not coincide with a natural gap between adjacent horizontal profile segments, for example where the characters overlap or where a diacritical mark extends into the space occupied by the next-right-character, the horizontal profile is progressively tested by moving the proposed segmentation point up to a predetermined distance (for example 1.5mm) into the next character space to the right, as shown in Figure 4B. If the proposed segmentation point is moved by this testing operation into a position in which it coincides with a profile segment gap, the proposed segmentation point is established as a separation point between characters in its modified position, as illustrated by the dashed line in Figure 4B. Referring to Figure 2, the sonant characters BU and PE are examples of characters that may have a wider than expected horizontal profile segments, and it would be necessary to employ the above proposed segmentation point position modification technique in order to establish the gap between a wider character of this type and an adjacent character.

As shown in Figure 4C, if the proposed segmentation point cannot be made to coincide with a profile segment gap by moving the proposed segmentation point up to a predetermined distance to the right, as illustrated by the arrow labelled 1, the proposed segmentation point is progressively moved up to a predetermined distance (for example 1.5mm) to the left, as illustrated by the arrow labelled 2. If a proposed segmentation point moved to the left coincides with a profile segment gap, the proposed segmentation point in its modified position is established as a separation point between characters, as illustrated by the dashed line in Figure 4C.

As shown in Figure 4D, if the proposed segmentation point could not be moved to the right (arrow 1) or to the left (arrow 2) to coincide with a natural separation point between characters, the initial position of the proposed segmentation point is established as a separation point between characters, as illustrated by the arrow labelled 3. This accommodates the instance of adjacent characters over-lapping, as shown in Figure 2 by the letters N and KU.

This segmentation technique enables each diacritical mark to be included with its proper base character, according to the usual language rules for writing Katakana sonants. One may alternatively, or additionally, use a vertical character profile, which is generated by suitable manipulation of the data from the scanner, or by physically reorienting the scanner with respect to the scanned document.

As noted earlier, Katakana characters with diacritical marks are generally taller and wider than those without. As illustrated in Figure 5, a plot of the width of the horizontal character line profile, which is directly related to actual character width, versus the frequency of character occurrence reflects that sonants are generally wider than non-sonants. Thus, width parameters can be used to reliably separate modified characters from unmodified characters.

Having separated the character line data into blocks of individual character data by segmenting the horizontal character line profiles as defined above, sonant identification begins, as illustrated in Figure 6, by encoding the character size and separating sonant characters from non-sonant characters based upon differences in the width of the horizontal character profiles, as illustrated in Figure 5. Next, the character data corresponding to the localised area expected to contain the diacritical mark is extracted from each block of individual character data and justified. The extracted character data and the rest of the stored character data are then passed to the character recognition logic for identification of the unknown character.

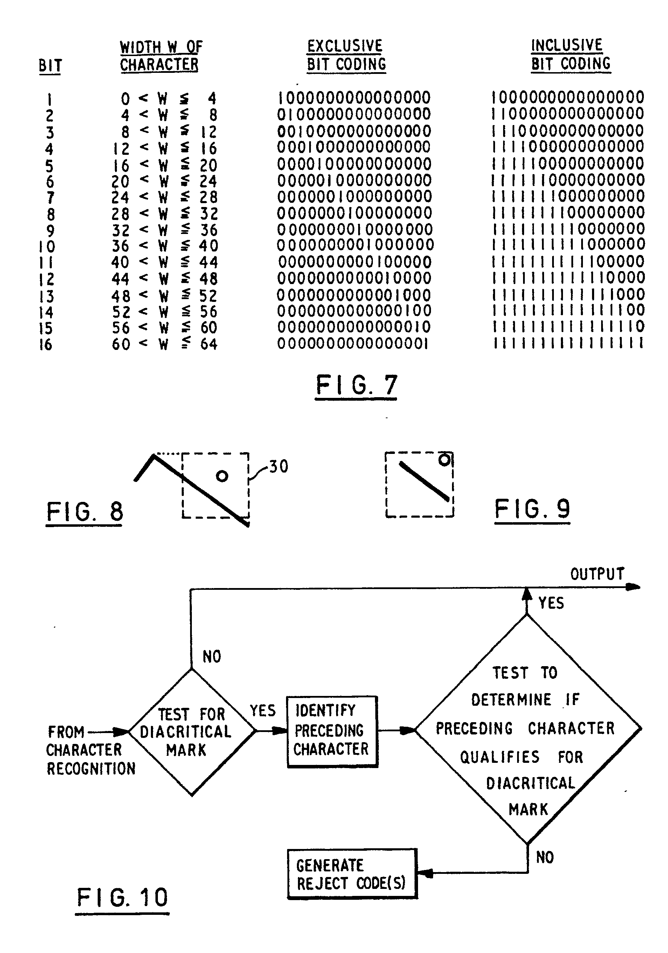

To encode character size, apparatus according to the present invention uses inclusive-bit-coding to logically store the height and width of the characters, including any diacritical marks. Referring to Figure 7, a 16-bit word is used to represent a character space that is 64 PELS wide, each bit corresponding to a width range of 4 PELS. Prior art techniques use exclusive-bit-encoding to set a single digit indicative of the width of each character. With this type of coding using a single bit test, all characters having a specific width can be separated from all others which are either greater or less than a specific value. However, to identify all characters greater than a specific value, a number of tests are required.

Using inclusive-bit-encoding, all bits of lower order than the bit set to represent a specific width are set to the same logic state (e. g. a logical 1). By way of example, if the width of a character is 38 PELS, the inclusive-bit-encoded word associated with the character is "1111 1111 1100 0000". By comparison, the exclusive-bit-encoded word is "0000 0000 0100 0000". Using inclusive-bit-coding, it is necessary to test only a single bit of the inclusive-bit-encoded words to separate wider (or taller) characters from smaller characters. Again by way of example, by testing bit 10 of the inclusive-bit-encoded register of Figure 7, all characters less than or equal to 40 PELS wide can be separated from all characters which are greater than 40 PELS wide. To accomplish the same result by testing the exclusive-bit-encoded register would require a minimum of seven bit tests for each word.

An additional advantage of the inclusive-bit-coding is for automatic design of recognition logics. Automatic design programs usually use a statistical decision algorithm which selects one bit to separate two distinct classes of characters based on some minimum error criteria. This coding scheme provides optimum information for such an algorithm.

Referring to Figures 8 and 9, the character data corresponding to a predetermined localised area of a character space which is the expected location of a diacritical mark is extracted and examined to recognise any diacritical mark present.

For Katakana characters, the diacritical mark is expected to be located in the upper right portion of the character space , and a sonant cut-out or window 30, identified by the dashed lines in Figure 8, is defined and the character data corresponding to this localised area is placed into a sonant cut-out buffer. In a preferred embodiment this cut-out is defined by the rightmost 13 PELS of the top 16 scan lines of the character image data (i.e. 1.6mm by 2.1mm). This size is believed to be optimum because it contains sufficient information for diacritical mark identification, it allows efficient data handling for microprocessor implementation, and is compatible with the recognition procedures for the base character. This location for the window was chosen because it provides the least interference with stroke segments of non-sonant characters or the base character of a sonant character. A fixed window location further provides a simple, efficient and reliable cutting process. The window size or location may be changed as necessary or desirable for other alphabets to accommodate different diacritical marks, but, for the Katakana alphabet, it is preferred to have the upper boundary level with the top of the base character and the right boundary level with the right-most portion of the base character.

In the preferred embodiment the character data within the window is registered to the upper right when it is placed into the sonant cut-out buffer, and it is stored in its un-normalised form. This locates the diacritical mark in the upper right corner of the window, which facilitates recognition of the diacritical mark, increases the reliability of the recognition, and reduces the storage required for the recognition logic. Character data within the window that corresponds to the base character is superfluous.

The character data in the sonant cut-out buffer may also be used to determine the presence or absence of certain diacritical mark features that may be used in the recognition process. These features are implemented in a tree-type logical testing structure, for example to separate sonant characters from non-sonant characters and to separate the two mark nigori from the circle maru.

Typical character recognition techniques include normalising or reducing the unknown character data for comparison with known sets of character data of a standardised size. Since diacritical marks are usually smaller than the base character, normalisation may result in a loss of small details necessary to recognise the diacritical mark, or a loss of resolution. To retain this information, the original un-normalised character data corresponding to the expected location area for the diacritical mark is extracted from the character data for the character and examined in its un-normalised condition. However, due to the larger size of the base character, its character data is often normalised. Final character recognition is then performed using the normalised character data of the unknown character, the un-normalised character data of the diacritical mark, and any diacritical mark features.

Following character recognition it may be desirable to verify that a separately identified diacritical mark should be associated with the preceding character. Referring to Figure 10, if a diacritical mark is present, the recognition result for the preceding character is examined to test if the preceding character is one of the twenty possible characters that may include a nigori or one of the five possible characters that may include a maru. If the preceding character turns out not to be a valid sonant base character, one or more reject codes will be generated.

The aforesaid prior art OCR machines operate under the Japanese Industry Standard which assigns a unique hexadecimal byte to each of the 46 kana symbols, and assigns the hexadecimal bytes "BE" to the nigori diacritical mark and "BF" to the maru diacritical mark. These bytes identify the diacritical mark, and indicate that the diacritical mark is written as a symbol separate and apart from a base character in its own character space. The present invention assigns two new code points to identify adjacent, hand written diacritical marks, yet includes the Japanese Industry Standard so that the output is compatible with existing OCR equipment. More specifically, "2F" is assigned to adjacent nigori, and "41" is assigned to adjacent maru.

In the drawings and specification there has been set forth an exemplary embodiment of the invention. It should be understood that while specific terms are used, they are employed in a generic and descriptive sense only and are not for purposes of limitation.

The full details of the character recognition apparatus have not been described since it will be fully appreciated by one skilled in the art how to construct apparatus which will operate as described herein.

## Claims

1. Character recognition apparatus, for recognising unknown characters of a known character set, some of the characters having diacritical marks associated therewith, including
   storage means for storing character data of an unknown character which may be associated with a diacritical mark,
   means for extracting from the stored character data the character data corresponding to a predetermined portion of the character which is the expected location of a diacritical mark, and
   examining means for examining the diacritical mark character data in the extracted character data and the rest of the stored character data of the unknown character in order to recognise the unknown character and any diacritical mark associated therewith,
   characterised in that
   said extracting means comprises
   means for justifying the extracted diacritical mark character data in a position spaced from the rest of the unknown character and means for storing the extracted and justified data,
   and in that said examining means comprises

means for examining the un-normalised diacritical mark character data in order to recognise said diacritical mark,

means for normalising the rest of said stored character data, and

means for examining said normalised character data in order to recognise said unknown character.

2. Apparatus as claimed in Claim 1 for recognising unknown characters printed in a line and including means for representing said characters by character line data, characterised in that

said apparatus comprises segmentation means for segmenting said character line data to obtain character data of the individual unknown characters and any diacritical marks associated therewith.

3. Apparatus as claimed in Claim 2 characterised in that

said segmentation means comprises

means for generating a binary character line profile in a direction parallel to the line of unknown characters and any diacritical marks associated therewith, and

means for separating said profile into segments each segment representing an unknown character including any diacritical marks associated therewith.

4. Apparatus as claimed in Claim 3 characterised in that

said means for generating a binary character line profile comprises

scanning means for scanning said line of characters along a plurality of parallel scan lines,

means for generating sets of character line data, and

means for logically combining corresponding portions of said sets of character line data using an OR function so that the logically combined sets of character line data represent character widths and horizontal separations between characters.

5. Apparatus as claimed in Claim 3 characterised in that

said segmentation means comprises

a) means for testing said profile for gaps between characters using proposed segmentation points at predetermined initial intervals and establishing as natural segmentation points those proposed segmentation points that coincide with gaps,

b) means for moving in one direction by controlled amounts those proposed segmentation points not coinciding with gaps between characters, and

means for testing the profile for other gaps at the moved proposed segmentation points and establishing as the natural segmentation points those moved proposed segmentation points that coincide with the gaps,

c) means for moving in the opposite direction by controlled amounts those proposed segmentation points not coinciding with gaps between characters and

means for testing the profile for other gaps at the moved proposed segmentation points and establishing as the natural segmentation point those moved proposed segmentation points that coincide with the gaps, and

d) means for establishing the proposed segmentation points as segmentation points for profiles not divided at a gap between characters,

whereby the individual portions of the profile between the segmentation points define the size of the separated individual segments of the unknown characters.

6. Apparatus as claimed in Claim 3 characterised in that

said apparatus comprises

means for measuring the generated profile segments of the unknown characters to distinguish larger characters which can be associated with a diacritical mark from smaller characters which cannot be associated with a diacritical mark.

7. Apparatus as claimed in Claim 6 characterised in that

said means for measuring a profile segment of a character comprises

means for generating an inclusive-bit-encoded word representative of the size of the character profile segment, and

means for testing a given bit in said word in order to distinguish larger characters from smaller characters.

8. Apparatus as claimed in Claim 1 characterised in that

said apparatus comprises means for verifying that any recognised diacritical mark is correctly associated with a character that can be associated with a diacritical mark.

9. A method of recognising unknown characters of a known character set, some of the characters having diacritical marks associated therewith, including the steps of

storing character data of an unknown character which may be associated with a diacritical mark,

extracting from the stored character data the character data corresponding to a predetermined portion of the character which is the expected location of a diacritical mark, and

examining the diacritical mark character data in the extracted character data and the rest of the stored character data of the unknown character in order to recognise the unknown character and any diacritical mark associated therewith,

characterised in that said data extraction operation comprises

justifying the extracted diacritical mark character data in a position spaced from the rest of the unknown character and storing the extracted and justified data,

and in that said examination operation comprises

examining the un-normalised diacritical mark character data in order to recognise said diacritical mark,

normalising the rest of said stored character data, and

examining said normalised character data in order to recognise said unknown character.

## Revendications

1. Dispositif de reconnaissance de caractères servant à reconnaître des caractères inconnus d'un ensemble de caractères connus, des signes diacritiques étant associés à certains des caractères, comprenant

des moyens de mémoire pour mémoriser des données d'un caractère inconnu, auxquels peut être associé un signe diacritique,

des moyens pour extraire, des données mémorisées de caractères, les données correspondant à une partie prédéterminée du caractère, et concernant l'emplacement attendu d'un signe diacritique, et

des moyens d'examen pour examiner les données du caractère concernant le signe diacritique et présentes dans les données extraites du caractère, et le reste des données mémorisées du caractère inconnu pour reconnaître ce caractère inconnu et toute marque diacritique qui lui est associée,

caractérisé en ce que lesdits moyens d'extraction comprennent

des moyens pour justifier les données extraites du caractère concernant le signe diacritique dans une position espacée du reste du caractère inconnu et des moyens pour mémoriser les données extraites et justifiées,

et en ce que lesdits moyens d'examen comprennent

des moyens pour examiner les données non normalisées du caractère concernant le signe diacritique pour reconnaître ce signe,

des moyens pour normaliser le reste desdites données mémorisées du caractère, et

des moyens pour examiner lesdites données normalisées du caractère afin de reconnaître ledit caractère inconnu.

2. Dispositif selon la revendication 1 pour reconnaître des caractères inconnus imprimés sur une ligne et comprenant des moyens pour représenter lesdits caractères au moyen de données de lignes de caractères, caractérisé en ce que

ledit dispositif comprend des moyens de segmentation pour segmenter lesdites données de lignes de caractères afin d'obtenir des données des caractères individuels inconnus et de tout signe diacritique, qui leur est associé.

3. Dispositif selon la revendication 2, caractérisé en ce que lesdits moyens de segmentation comprennent

des moyens pour produire un profil d'une ligne de caractères binaires dans une direction parallèle à la ligne de caractères inconnus et de toute marque diacritique qui leur est associée, et

des moyens pour subdiviser ledit profil en segments, dont chacun représente un caractère inconnu, y compris toute marque diacritique qui lui est associée.

4. Dispositif selon la revendication 3, caractérisé en ce que lesdits moyens de production d'un profil de lignes de caractères binaires comprennent

des moyens d'exploration par balayage pour balayer ladite ligne de caractères suivant une pluralité de lignes de balayage parallèles,

des moyens pour produire des ensembles de données de lignes de caractères, et

des moyens pour combiner logiquement des parties correspondantes desdits ensembles des données de lignes de caractères en utilisant une fonction OU de sorte que les ensembles combinés logiquement de données de lignes de caractères représentent des largeurs de caractères et des séparations horizontales entre les caractères.

5. Dispositif selon la revendication 3, caractérisé en ce que

lesdits moyens de segmentation comprennent

a) des moyens pour tester ledit profil pour voir s'il présente des intervalles entre des caractères, en utilisant des points proposés de segmentation à des intervalles initiaux prédéterminés et en établissant, en tant que points naturels de segmentation, les points proposés de segmentation qui coïncident avec des intervalles,

b) des moyens pour déplacer dans une direction, sur des distances commandées, les points proposés de segmentation qui ne coïncident pas avec des intervalles entre des caractères, et

des moyens pour tester le profil pour voir s'il existe d'autres intervalles au niveau des points proposés déplacés de segmentation et déterminer, en tant que points naturels de segmentation, les points proposés déplacés de segmentation qui coïncident avec les intervalles,

c) des moyens pour déplacer, dans la direction opposée, sur des distances commandées, les points proposés de segmentation qui ne coïncident pas avec des intervalles présents entre les caractères, et

des moyens pour tester le profil pour voir s'il présente d'autres intervalles aux points proposés déplacés de segmentation, et déterminer comme points naturels de segmentation, les points proposés déplacés de segmentation qui coïncident avec les intervalles, et

d) des moyens pour établir les points proposés de segmentation en tant que points de segmentation pour des profils non subdivisés au niveau d'un intervalle entre des caractères,

les parties individuelles du profil entre les points de segmentation définissant la taille des segments individuels séparés des caractères inconnus.

6. Dispositif selon la revendication 3, caractérisé en ce que ledit dispositif comprend

des moyens pour mesurer les segments de profil produits des caractères inconnus pour distinguer les caractères plus grands, auquel peut être associé à un signal diacritique, de caractères plus petits, auquel ne peut pas être associé un signe diacritique.

7. Dispositif selon la revendication 6, caractérisé en ce que

lesdits moyens pour mesurer un segment de profil d'un caractère comprennent

des moyens pour produire un mot codé avec un codage binaire incisif, représentatif de la taille du segment de profil du caractère, et

des moyens pour tester un bit donné dans ledit mot pour distinguer des caractères plus grands, de caractères plus petits.

8. Dispositif selon la revendication 1, caractérisé en ce que

ledit dispositif comprend des moyens pour vérifier que tout signe diacritique identifié est associé correctement à un caractère auquel peut être associé un signe diacritique.

9. Procédé pour reconnaître des caractères inconnus d'un ensemble de caractères connus, des signes diacritiques étant associés à certains des caractères, comprenant les étapes consistant à :

mémoriser des données d'un caractère inconnu, auquel peut être associé un signe diacritique,

extraire, des données mémorisées du caractère, les données du caractère correspondant à une partie prédéterminée de ce caractère, qui est l'emplacement attendu d'un signe diacritique, et

examiner les données du caractère concernant le signe diacritique et présentes dans les données extraites du caractère et le reste des données mémorisées du caractère inconnu pour identifier ce caractère inconnu et tout signe diacritique qui lui est associé,

caractérisé en ce que

ladite opération d'extraction de données comprend

la justification des données extraites du caractère concernant le signe diacritique dans une position séparée du reste du caractère inconnu et la mémorisation des données extraites et justifiées,

et en ce que ladite opération d'examen comprend

l'examen des données non normalisées du caractère concernant le signe diacritique pour identifier ledit signe diacritique,

la normalisation du reste desdites données mémorisées du caractère, et

l'examen desdites données normalisées de caractères pour reconnaître ledit caractère inconnu.

**Patentansprüche**

1. Zeichenerkennungseinrichtung zum Erkennen unbekannter Zeichen eines bekannten Zeichensatzes, wobei einige der Zeichen ihnen zugeordnete diakritische Zeichen aufweisen, mit:

Speichermitteln zum Speichern von Zeichendaten eines unbekannten Zeichens, das einem diakritischen Zeichen zugeordnet werden kann,

einem Mittel zum Extrahieren der einem vorbestimmten Teil des Zeichens entsprechenden Zeichendaten aus den gespeicherten Zeichendaten, welcher die erwartete Stelle eines diakritischen Zeichens ist und

einem Prüfmittel zum Prüfen der Zeichendaten des diakritischen Zeichens in den extrahierten Zeichendaten und des Restes der gespeicherten Zeichendaten des unbekannten Zeichens, um das unbekannte Zeichen und irgendein, diesem zugeordnetes diakritisches Zeichen zu erkennen,

dadurch gekennzeichnet, daß

das Mittel zum Extrahieren aufweist:

Mittel zum Justieren der extrahierten Zeichendaten des diakritischen Zeichens in einer von dem Rest des unbekannten Zeichens beabstandeten Stelle und Mittel zum Speichern der extrahierten und justierten Daten,

und daß das Prüfmittel aufweist:

Mittel zum Prüfen der nicht normalisierten Zeichendaten des diakritischen Zeichens, um das diakritische Zeichen zu erkennen,

Mittel zum Normalisieren des Restes der gespeicherten Zeichendaten und

Mittel zum Prüfen der normalisierten Zeichendaten, um das unbekannte Zeichen zu erkennen.

2. Einrichtung nach Anspruch 1 zum Erkennen unbekannter, in einer Zeile gedruckter Zeichen und welche Mittel zum Repräsentieren der Zeichen durch Zeichenzeilendaten aufweist, dadurch gekennzeichnet, daß

die Einrichtung ein Segmentierungsmittel zum Segmentieren der Zeichenzeilendaten aufweist, um Zeichendaten der einzelnen unbekannten Zeichen und irgendwelcher diesen zugeordneten diakritischen Zeichen zu erhalten.

3. Einrichtung nach Anspruch 2, dadurch gekennzeichnet, daß das Segmentierungsmittel aufweist:

ein Mittel zum Erzeugen eines Binärzeichen-Zeilenprofils in eine Richtung, die parallel zu der Zeile unbekannter Zeichen und irgendwelcher diesen zugeordneten diakritischen Zeichen liegt und

Mittel zum Trennen des Profils in Segmente, wobei jedes Segment ein unbekanntes Zeichen einschließlich irgendwelcher, diesem zugeordneten diakritischen Zeichen repräsentiert.

4. Einrichtung nach Anspruch 3, dadurch gekennzeichnet, daß das Mittel zum Erzeugen eines Binärzeichen-Zeilenprofils aufweist:

Abtastmittel zum Abtasten der Zeile von Zeichen entlang einer Mehrzahl paralleler Abtastzeilen,

Mittel zum Erzeugen von Sätzen von Zeichenzeilendaten und

Mittel zum logischen Kombinieren entsprechender Teile der Sätze von Zeichenzeilendaten unter Verwendung einer OR-Funktion, sodaß die logisch kombinierten Sätze von Zeichenzeilendaten Zeichenbreiten und horizontale Trennungen zwischen Zeichen repräsentieren.

5. Einrichtung nach Anspruch 3, dadurch gekennzeichnet, daß das Segmentierungsmittel aufweist:
   a) Mittel zum Prüfen des Profils für Lücken zwischen Zeichen unter Verwendung vorgeschlagener Segmentierungsstellen bei vorbestimmten Anfangsintervallen und unter Festsetzung jener vorgeschlagenen Segmentierungsstellen, die mit Lücken zusammenfallen, als natürliche Segmentierungsstellen,
   b) Mittel zum Bewegen jener vorgeschlagenen Segmentierungsstellen, die mit Lücken zwischen Zeichen nicht zusammenfallen, in eine Richtung in kontrollierten Schritten und

   Mittel zum Prüfen des Profils für andere Lücken bei den bewegten vorgeschlagenen Segmentierungsstellen und zum Festsetzen jener bewegter vorgeschlagener Segmentierungsstellen, die mit den Lücken zusammenfallen, als natürliche Segmentierungsstellen,
   c) Mittel zum Bewegen jener vorgeschlagener Segmentierungsstellen, die mit Lücken zwischen Zeichen nicht zusammenfallen, in die entgegengesetzte Richtung in kontrollierten Schritten und

Mittel zum Prüfen des Profils für andere Lücken bei den bewegten vorgeschlagenen Segmentierungsstellen und zum Festsetzen jener bewegten vorgeschlagenen Segmentierungsstellen, die mit den Lücken zusammenfallen, als die natürliche Segmentierungsstelle und

d) Mittel zum Festsetzen der vorgeschlagenen Segmentierungsstellen als Segmentierungsstellen für Profile, die bei einer Lücke zwischen Zeichen nicht geteilt sind,

wodurch die einzelnen Teile des Profils zwischen den Segmentierungsstellen die Größe der getrennten einzelnen Segmente der unbekannten Zeichen definieren.

6. Einrichtung nach Anspruch 3, dadurch gekennzeichnet, daß

die Einrichtung aufweist:

ein Mittel zum Messen der erzeugten Profilsegmente der unbekannten Zeichen, um größere Zeichen zu unterscheiden, die einem diakritischen Zeichen aus kleineren Zeichen zugeordnet werden können, die einem diakritischen Zeichen nicht zugeordnet werden können.

7. Einrichtung nach Anspruch 6, dadurch gekennzeichnet, daß das Mittel zum Messen eines Profilsegmentes eines Zeichens aufweist:

Mittel zum Erzeugen eines Inklusives Bit-codierten Wortes, welches die Größe des Zeichenprofilsegmentes repräsentiert und

Mittel zum Prüfen eines gegebenen Bits in dem Wort, um größere Zeichen von kleineren Zeichen zu unterscheiden.

8. Einrichtung nach Anspruch 1, dadurch gekennzeichnet, daß

die Einrichtung Mittel zum Überprüfen aufweist, daß irgendein diakritisches Zeichen einem Zeichen richtig zugeordnet ist, das einem diakritischen Zeichen zugeordnet werden kann.

9. Verfahren zum Erkennen unbekannter Zeichen eines bekannten Zeichensatzes, wobei einige der Zeichen ihnen zugeordnete diakritische Zeichen aufweisen, welches die folgenden Schritte umfaßt:

Speichern von Zeichendaten eines unbekannten Zeichens, das einem diakritischen Zeichen zugeordnet werden kann,

Extrahieren der einem vorbestimmten Teil des Zeichens entsprechenden Zeichendaten aus den gespeicherten Zeichendaten, welcher die erwartete Stelle eines diakritischen Zeichens ist und

Prüfen der Zeichendaten des diakritischen Zeichens in den extrahierten Zeichendaten und des Restes der gespeicherten Zeichendaten des unbekannten Zeichens, um das unbekannte Zeichen und irgendein diesem zugeordnetes diakritisches Zeichen zu erkennen,

dadurch gekennzeichnet, daß

der Schritt zum Extrahieren umfaßt:

Justieren der extrahierten Zeichendaten des diakritischen Zeichens in einer von dem Rest des unbekannten Zeichens beabstandeten Stelle und Speichern der extrahierten und justierten Daten,

und daß der Schritt zum Prüfen umfaßt:

Prüfen der nicht normalisierten Zeichendaten des diakritischen Zeichens, um das diakritische Zeichen zu erkennen,

Normalisieren des Restes der gespeicherten Zeichendaten und

Prüfen der normalisierten Zeichendaten, um das unbekannte Zeichen zu erkennen.

**FIG.1**

**FIG. 2**

**FIG. 3**

FIG. 4A

FIG. 4B

FIG. 4C

FIG. 4D

FIG. 5

FREQUENCY OF CHARACTER

NON SONANTS

SONANTS

WIDTH OF HORIZONTAL CHARACTER PROFILE

FROM PREPROCESSING → CHARACTER IMAGE → ENCODE CHARACTER 'SIZE'

TO CHARACTER RECOGNITION ← JUSTIFY DIACRITICAL MARK DATA ← EXTRACT DIACRITICAL MARK DATA

FIG. 6

14

| BIT | WIDTH W OF CHARACTER | EXCLUSIVE BIT CODING | INCLUSIVE BIT CODING |
|---|---|---|---|
| 1 | 0 < W ≤ 4 | 1000000000000000 | 1000000000000000 |
| 2 | 4 < W ≤ 8 | 0100000000000000 | 1100000000000000 |
| 3 | 8 < W ≤ 12 | 0010000000000000 | 1110000000000000 |
| 4 | 12 < W ≤ 16 | 0001000000000000 | 1111000000000000 |
| 5 | 16 < W ≤ 20 | 0000100000000000 | 1111100000000000 |
| 6 | 20 < W ≤ 24 | 0000010000000000 | 1111110000000000 |
| 7 | 24 < W ≤ 28 | 0000001000000000 | 1111111000000000 |
| 8 | 28 < W ≤ 32 | 0000000100000000 | 1111111100000000 |
| 9 | 32 < W ≤ 36 | 0000000010000000 | 1111111110000000 |
| 10 | 36 < W ≤ 40 | 0000000001000000 | 1111111111000000 |
| 11 | 40 < W ≤ 44 | 0000000000100000 | 1111111111100000 |
| 12 | 44 < W ≤ 48 | 0000000000010000 | 1111111111110000 |
| 13 | 48 < W ≤ 52 | 0000000000001000 | 1111111111111000 |
| 14 | 52 < W ≤ 56 | 0000000000000100 | 1111111111111100 |
| 15 | 56 < W ≤ 60 | 0000000000000010 | 1111111111111110 |
| 16 | 60 < W ≤ 64 | 0000000000000001 | 1111111111111111 |

F I G. 7

FIG. 8

FIG. 9

F I G. 10